**Europäisches Patentamt**

(19) **European Patent Office**

**Office européen des brevets**

(11) Veröffentlichungsnummer : **0 138 893**
**B1**

(12) **EUROPÄISCHE PATENTSCHRIFT**

(45) Veröffentlichungstag der Patentschrift :
**11.02.87**

(51) Int. Cl.⁴ : **G 01 L   9/12**

(21) Anmeldenummer : **84901191.1**

(22) Anmeldetag : **14.03.84**

(86) Internationale Anmeldenummer :
**PCT/DE 84/00060**

(87) Internationale Veröffentlichungsnummer :
**WO/8403767 (27.09.84 Gazette 84/23)**

(54) **KAPAZITIVER DRUCKSENSOR.**

(30) Priorität : **24.03.83 DE 3310643**

(43) Veröffentlichungstag der Anmeldung :
**02.05.85 Patentblatt 85/18**

(45) Bekanntmachung des Hinweises auf die Patenterteilung : **11.02.87 Patentblatt 87/07**

(84) Benannte Vertragsstaaten :
**AT BE CH DE FR GB LI LU NL SE**

(56) Entgegenhaltungen :
**EP-A- 0 059 488**
**IEEE Transactions on Electron Devices, Band ED-29, Januar 1982, Nr. 1 New York (US) W.H. Ko u.a.: "A high-sensitivity integrated-circuit capacitive pressure transducer", Seiten 48-56**
**Patents Abstracts of Japan, Band 7, Nr. 142, (P-205) (1287) 22. Juni 1983 Tokyo (JP)**

(73) Patentinhaber : **ZIEGLER, Karlheinz**
**Alemannenstrasse 1**
**D-7801 Mengen-Schallstadt (DE)**

(72) Erfinder : **ZIEGLER, Karlheinz**
**Alemannenstrasse 1**
**D-7801 Mengen-Schallstadt (DE)**

(74) Vertreter : **Rackette, Karl, Dipl.-Phys. Dr.-Ing**
**Kaiser-Joseph-Strasse 179 Postfach 1310**
**D-7800 Freiburg (DE)**

## Beschreibung

Die Erfindung betrifft einen Drucksensor mit einer einen Meßkondensator abdeckenden Halbleitermembran, die in einem Abstand von einer feststehenden Gegenelektrode angeordnet ist.

Ein solcher Drucksensor ist aus der EP-A2-0 024 945 bekannt und dient zur Erfassung eines Absolut- oder Relativdruckes, insbesondere bei einem Kraftfahrzeugmotor, indem die bei einer Durchbiegung der Halbleitermembran veränderte Kapazität erfaßt wird. Die Gegenelektrode des bekannten Drucksensors ist als leitende Schicht auf einem isolierenden Glassubstrat aufgebracht. Das Glassubstrat ist insgesamt mit einer dotierten Siliziumscheibe bedeckt, in der eine Ausnehmung durch Ätzen geschaffen worden ist. Der mittlere, durch Ätzen geschwächte Bereich der Siliziumscheibe wirkt als flexible Membran, während der stehengebliebene Rand der Siliziumscheibe mit dem Glassubstrat verbunden ist. Die Siliziumscheibe stellt somit insgesamt eine Elektrode eines Meßkondensators dar.

Die Herstellung des bekannten Drucksensors erfordert eine Reihe von technologischen Schritten, die den Schritten in der Dickfilmtechnik entsprechen. Aus diesem Grund ist eine kostengünstige Massenherstellung schwer zu verwirklichen. Da die gesamte Siliziumscheibe als Elektrode ausgebildet ist, müssen Referenzkapazitäten zusätzlich außerhalb des Drucksensors zur Verfügung gestellt werden. Schließlich ist der bekannte Drucksensor gegenüber Störspannungen ungeschützt.

Ausgehend von diesem Stand der Technik liegt der Erfindung die Aufgabe zugrunde, einen Drucksensor der eingangs genannten Art zu schaffen, der mit möglichst wenigen Schritten der üblichen und ausgereiften Siliziumtechnologie kostengünstig herstellbar ist und es gestattet, auf einfache Weise Referenzkapazitäten und Guardspannungselektroden vorzusehen.

Diese Aufgabe wird erfindungsgemäß dadurch gelöst, daß als Meßelektrode auf der Halbleitermembran einer ersten Halbleiterscheibe isoliert von dieser eine erste leitende Schicht und daß als Gegenelektrode auf einer zweiten Halbleiterscheibe isoliert von dieser eine zweite leitende Schicht aufgebracht sind.

Dadurch, daß beide Elektroden als Substrat einen Halbleiter verwenden, ergeben sich für die Herstellung der die Halbleitermembran tragenden Halbleiterscheibe und der die Gegenelektrode tragenden Halbleiterscheibe ähnliche gut beherrschbare technologische Verfahrensschritte.

Bei einem zweckmäßigen Ausführungsbeispiel der Erfindung sind die Halbleiterscheiben Siliziumscheiben, auf denen als Isolierschicht eine Siliziumoxidschicht aufoxidiert ist. Zweckmäßig ist es, wenn sowohl die Meßelektrode als auch die Gegenelektrode scheibenförmig ausgebildet sind und von im wesentlichen ringförmig geformten Abschirmelektroden umgeben sind. Die Abschirmelektroden können mit einer Abschirmspannung beaufschlagt werden, die das gleiche Potential wie die empfindliche Meßelektrode hat. Auf diese Weise können störende elektrische Einflüsse weitgehend ausgeschaltet werden. Eine besonders einfache Fertigung ergibt sich, wenn die Siliziumscheiben durch Einsatz der Bumping-Technologie elektrisch und mechanisch miteinander verbunden werden.

In den Abschirmelektroden können ringförmige Ausnehmungen vorgesehen sein, um Platz für die Elektroden eines Referenzkondensators zu schaffen.

Zweckmäßig ist es, wenn die Abschirmelektroden galvanisch mit den Siliziumscheiben verbunden sind, weil dann die gesamte Siliziumscheibe als Abschirmelektrode wirksam wird.

Bei einem zweckmäßigen Ausführungsbeispiel der Erfindung ist als oberste Schicht auf den Siliziumscheiben eine Abdeckschicht aus Silox vorgesehen, die für die Referenzkapazitäten als Dielektrikum und für die Meßkapazität als Abstandshalter wirkt.

Weitere zweckmäßige Ausbildungen sind in den abhängigen Ansprüchen gekennzeichnet.

In der Zeichnung ist ein Ausführungsbeispiel des Gegenstandes der Erfindung dargestellt. Es zeigen :

Figur 1 die erste der beiden Siliziumscheiben des erfindungsgemäßen Drucksensors in einer Draufsicht auf die mit Elektroden versehene Seite,

Figur 2 eine Draufsicht auf die mit Elektroden versehene Seite der unteren Siliziumscheibe,

Figur 3 einen Querschnitt durch die Siliziumscheiben gemäß den Fig. 1 und 2 entlang den Linien III-III,

Figur 4 einen Querschnitt durch die Siliziumscheiben gemäß den Fig. 1 und 2 entlang den Linien IV-IV und

Figur 5 ein Ersatzschaltbild des erfindungsgemäßen Sensors zur Veranschaulichung der Bedeutung der verschiedenen Elektroden.

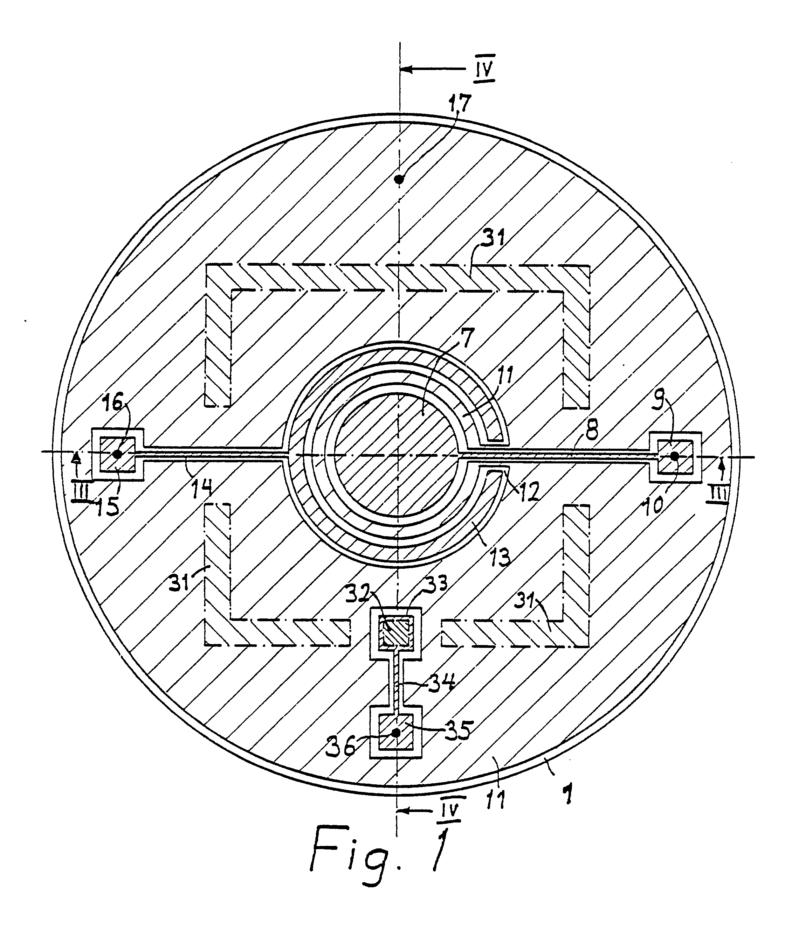

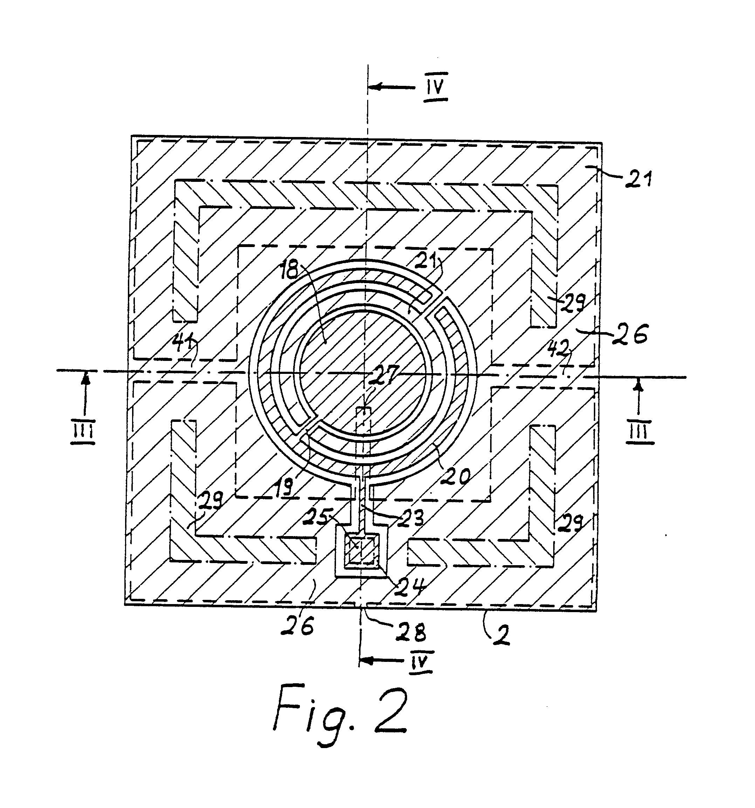

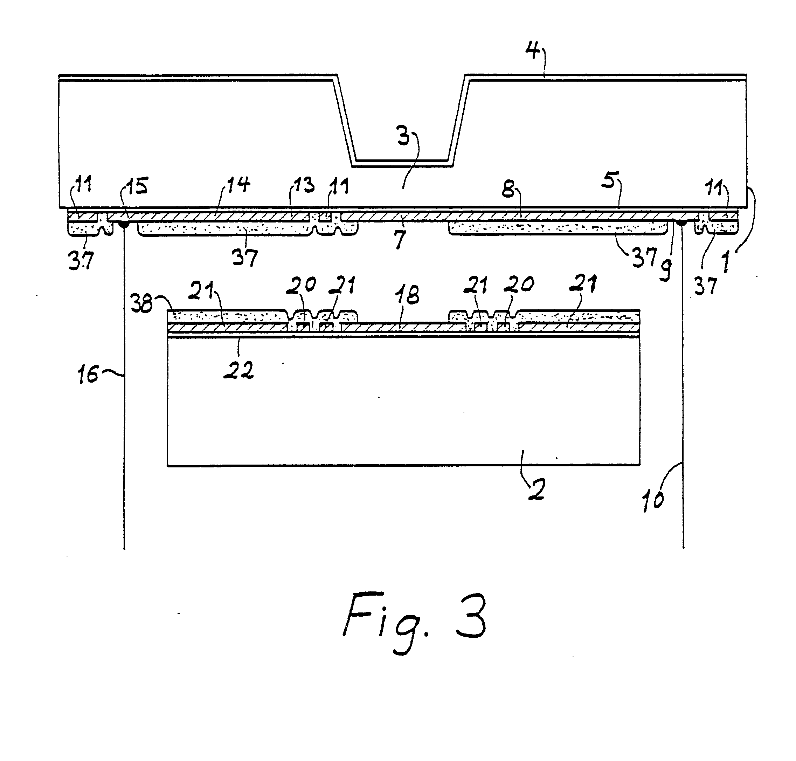

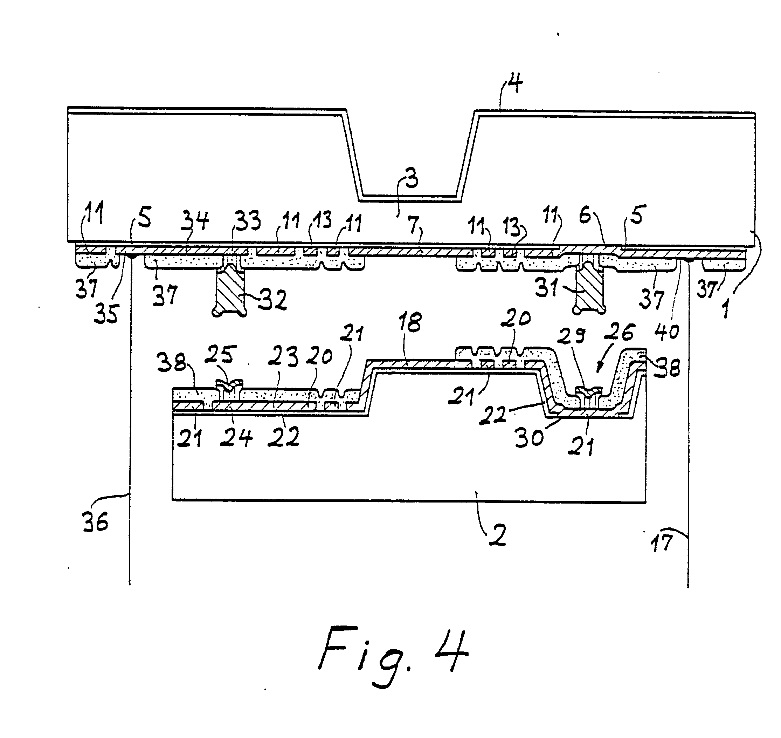

Der Drucksensor besteht aus zwei in üblicher Siliziumtechnologie bearbeiteten Siliziumscheiben, nämlich einer oberen Siliziumscheibe 1 und einer unteren Siliziumscheibe 2. Die in den Fig. 1 und 2 dargestellten Siliziumscheiben 1, 2 werden nach Abschluß der technologischen Schritte in der aus den Fig. 3 und 4 erkennbaren Weise zueinander justiert und dann durch Aufeinanderdrücken mechanisch und elektrisch miteinander verbunden.

In der oberen Siliziumscheibe 1 ist durch Siliziumätzen eine Membran 3 erstellt worden, die in ihrer radialen Ausdehnung in der Zeichnung verhältnismäßig zu klein dargestellt ist. Die mit dem zu messenden Druck beaufschlagte Seite der oberen Siliziumscheibe 1 sowie die Membran 3 sind mit einer Schutzschicht 4 überzogen, wie in den Fig. 3 und 4 zu erkennen ist.

Auf der in Fig. 3 nach unten weisenden Seite der oberen Siliziumscheibe 1 ist beispielsweise durch Oxidation eine Siliziumdioxidschicht 5 mit einem in Fig. 4 dargestellten Oxidfenster 6 aufgebracht.

Durch Bedampfen der Siliziumdioxidschicht 5 mit Aluminium, Maskieren und anschließendes Ätzen sind auf der oberen Siliziumscheibe 1 mehrere Elektroden mit wenigen Fertigungsschritten der üblichen Siliziumtechnologie aufgebracht.

Unterhalb der Membran 3 befindet sich eine Meßelektrode 7, die über einen Meßelektrodenstreifen 8 in der aus den Fig. 1 und 3 erkennbaren Weise mit einer Meßelektrodenanschlußfläche 9 verbunden ist. Die Anschlußfläche 9 ist durch Bonden mit einer Meßelektrodenzuleitung 10 in elektrischer Verbindung.

Die Meßelektrode 7 ist vorzugsweise als runde Scheibe ausgebildet, die von einer oberen Abschirmelektrode 11 umgeben ist. Wie man in Fig. 1 erkennt, ist in der oberen Abschirmelektrode 11 eine obere Ausnehmung 12 vorgesehen, in der eine weitere als fast geschlossener Ring ausgebildete Referenzelektrode 13 stehen geblieben ist.

Die Referenzelektrode 13 ist über einen Referenzelektrodenstreifen 14 mit einer Referenzelektrodenanschlußfläche 15 verbunden, die in entsprechend vorgesehenen Bereichen der Ausnehmung 12 liegen. Wie man in Fig. 3 erkennt, ist die Referenzelektrodenanschlußfläche 15 mit einer Referenzzuleitung 16 durch Bonden elektrisch verbunden. Die Referenzelektrode 13 ist, wie am besten aus Fig. 1 hervorgeht, allseitig von der oberen Abschirmelektrode 11 umgeben, die in üblicher Weise an einen Guardspannungsgenerator oder Abschirmspannungsgenerator über eine in Fig. 4 dargestellte mit einer Abschirmelektrodenanschlußfläche 40 verbundene Abschirmspannungszuleitung 17 angeschlossen ist.

Die Meßelektrode 7 bildet zusammen mit einer in den Fig. 2 bis 4 dargestellten inneren Gegenelektrode 18 einen druckempfindlichen Meßkondensator zur Erfassung des die Membran 3 durchbiegenden Druckes. Die scheibenförmige innere Gegenelektrode 18 ist über eine Brücke 19 mit einer im wesentlichen ringförmigen äußeren Gegenelektrode 20 elektrisch verbunden. Wie man durch einen Vergleich der Fig. 1 und 2 sowie aus Fig. 3 erkennt, bilden die äubere Gegenelektrode 20 und die Referenzelektrode 13 einen Referenzkondensator, dessen Kapazität im wesentlichen durch die Abmessungen der Referenzelektrode 13 und der äußeren Gegenelektrode 20 sowie deren Abstand voneinander und das zwischen ihnen liegende Dielektrikum bestimmt ist.

Zwischen der inneren Gegenelektrode 18 und der äußeren Gegenelektrode 20 befindet sich, ähnlich wie auf der oberen Siliziumscheibe 1, ein ringförmiger Abschnitt einer unteren Abschirmelektrode 21. Die untere Abschirmelektrode 21 ist mit der oberen Abschirmelektrode 11 durch eine Bumpverbindung elektrisch verbunden, die auch zur mechanischen Verbindung der oberen Siliziumscheibe 1 mit der unteren Siliziumscheibe 2 dient.

Die innere Gegenelektrode 18 und die äußere Gegenelektrode 20 sind elektrisch von der unteren Siliziumscheibe 2 durch eine Siliziumdioxidschicht 22 isoliert. Die äußere Gegenelektrode 20 ist über einen Gegenelektrodenstreifen 23 mit einer Gegenelektrodenanschlußfläche 24 verbunden. Die Gegenelektrodenanschlußfläche 24 ist mit einem diffusionshemmenden Metallfilm überzogen, auf dem ein Bump-Kontakt 25 aus Gold aufgebracht ist. Der Bump-Kontakt 25 befindet in einer Ätzgrube 26, die die äußere Gegenelektrode 20 umgibt und mit einem Kanal 27 bis zur inneren Gegenelektrode 18 verlängert ist, so daß über den Kanal 27 eine Belüftung oder Entlüftung des zwischen der Meßelektrode 7 und der inneren Gegenelektrode 18 gebildeten Meßkondensators erfolgen kann. Dazu ist die Ätzgrube 26 über eine Öffnung 28 zugänglich, wenn die obere Siliziumscheibe 1 mit der unteren Siliziumscheibe 2 verbunden ist. Innerhalb des Ätzgrube 26 sind zwei in Fig. 2 sichtbare Stege 41, 42 zur Abstützung und Abschirmung des Meßelektrodenstreifens 8 und des Referenzelektrodenstreifens 14 vorgesehen.

In der Siliziumdioxidschicht 22 ist ein Oxidfenster 30 vorgesehen, um die untere Abschirmelektrode 21 mit der unteren Siliziumscheibe 2 elektrisch zu verbinden. Die untere Abschirmelektrode 21 ist unter Zwischenlegen eines diffusionshemmenden Metalls mit Bump-Kontakten 29 aus Gold versehen. Die Bump-Kontakte 29 liegen ebenso wie der Bump-Kontakt 25 zurückgezogen in der Ätzgrube 26 der unteren Siliziumscheibe 2.

Gegenüber den Bump-Kontakten 29 befinden sich Bump-Kontaktleisten 31 aus Gold. Gegenüber dem Bump-Kontakt 25 ist ein in Fig. 2 und 4 dargestelltes Bump-Kontaktstück 32 aus Gold angeordnet, das über eine diffusionshemmende Metallschicht mit einer Gegenelektrodenkontaktfläche 33 elektrisch verbunden ist. Die Gegenelektrodenkontaktfläche 33 ist in der in Fig. 1 dargestellten Weise über einen Kontaktstreifen 34 mit einer Gegenelektrodenanschlußfläche 35 verbunden, die ihrerseits zum Anschluß einer Gegenelektrodenzuleitung 36 dient.

Beim Zusammenbau des Sensors werden die in den Fig. 1 bis 4 dargestellte obere Siliziumscheibe 1 und untere Siliziumscheibe 2 zunächst in der aus den Fig. 3 und 4 ersichtlichen Weise mit Hilfe in der Zeichnung nicht dargestellter Justiermarken zueinander orientiert und dann aufeinander gedrückt. Dabei gelangen die Bump-Kontaktleisten 31 und das Bump-Kontaktstück 32 in die Ätzgrube 26 und berühren schließlich die zugeordneten gegebenenfalls verzinnten Bump-Kontakte 25 und 29. Durch Anwendung des zur Herstellung von Bump-Verbindungen üblichen Druckes erfolgt bei entsprechender Temperatur eine mechanische Verbindung der oberen Siliziumscheibe 1 mit der unteren Siliziumscheibe 2, wobei gleichzeitig eine elektrische Verbindung der unteren Abschirmelektrode 21 mit der oberen Abschirmelektrode 11 erfolgt. Da diese ihrerseits jeweils mit der oberen Siliziumscheibe 1 bzw. unteren Siliziumscheibe 2 elektrischen Kontakt haben, ergibt sich durch den Bump-Prozeß auch eine elektrische Verbindung der Siliziumscheiben 1 und 2.

Um die auf der oberen Siliziumscheibe 1 angeordneten Elektroden von den auf der unteren Siliziumscheibe 2 angeordneten Elektroden zu isolieren, sind auf der oberen Siliziumscheibe 1 eine obere Abdeckschicht 37 und auf der unteren Siliziumscheibe 2 eine untere Abdeckschicht 38 vorgesehen. Die Abdeckschichten 37 und 38 bestehen beispielsweise aus Silox und haben neben ihrer Funktion als Isolator noch die zusätzliche Funktion eines Abstandshalters und Dielektrikums für den Referenzkondensator. Durch die Dicke der Abdeckschichten 37 und 38 werden weiterhin die Größe der Meßkapazität und die maximale Durchbiegung der Membran 3 bis zur Berührung mit der inneren Gegenelektrode 18 bestimmt.

Bei einem weiteren in der Zeichnung nicht dargestellten Ausführungsbeispiel können beim Bump-Prozeß auch Bumps an den Anschlußflächen angebracht werden, so daß die Zuleitungen durch Tape-Bonding hergestellt werden.

Bei einem weiteren in der Zeichnung nicht dargestellten Ausführungsbeispiel werden die Siliziumdioxidschichten 5 und 22 durch p-n Übergänge und die leitenden Bahnen durch die Diffusionszonen ersetzt. Die Erzeugung der Abdeckschichten 37 und 38 kann dann teilweise oder ganz durch thermische Oxidation erfolgen. Der Nachteil einer solchen Anordnung liegt aber darin, daß bei Temperaturen über 120 °C bis 150 °C keine Isolation gegen das Silizium-Substrat mehr erfolgt.

An die Stelle des Aluminiums können auch andere Metalle z. B. Wolfram und Platin treten, wobei Indium als Verbindungsmetall bei den Bumps eingesetzt würde.

Statt des Aluminiums könnte auch Polysilizium als Elektrodenmaterial eingesetzt werden, wobei ein Teil des Polysiliziums thermisch oxidiert werden könnte und so teilweise oder ganz die Abdeckschicht gebildet werden könnte, was im Falle der ausschließlichen Anwendung der thermischen Oxidation eine genauere Einstellung der Oxiddicke erlauben würde. Dadurch ist weiter auch eine höhere Betriebstemperatur möglich.

Zur besseren Abschirmung, insbesondere bei höheren Temperaturen, können die Siliziumplatten nach dem Siliziumätzen zunächst mit Polysilizium überzogen werden.

Wie bereits oben erwähnt, können an den Anschlüssen der Zuleitungen im Bumping-Verfahren auch Bumps aufgebracht werden, so daß für die Anschlüsse das Tape-Bonding eingesetzt werden kann.

Mit dem oben beschriebenen Drucksensor können sowohl Absolutdruck- als auch Relativdruckmessungen durchgeführt werden. Während bei Absolutdruckmessungen die Öffnung 28 verschlossen ist, steht diese bei Relativdruckmessungen über einen Entlüftungskanal mit der Bezugsdruckquelle in Verbindung. Bei Absolutdruckmessungen ist es zweckmäßig, auf den Rand der Siliziumscheibe 1 eine Glaskapsel aufzusetzen und diese durch anodisches Bonden mit dem Silizium zu verbinden.

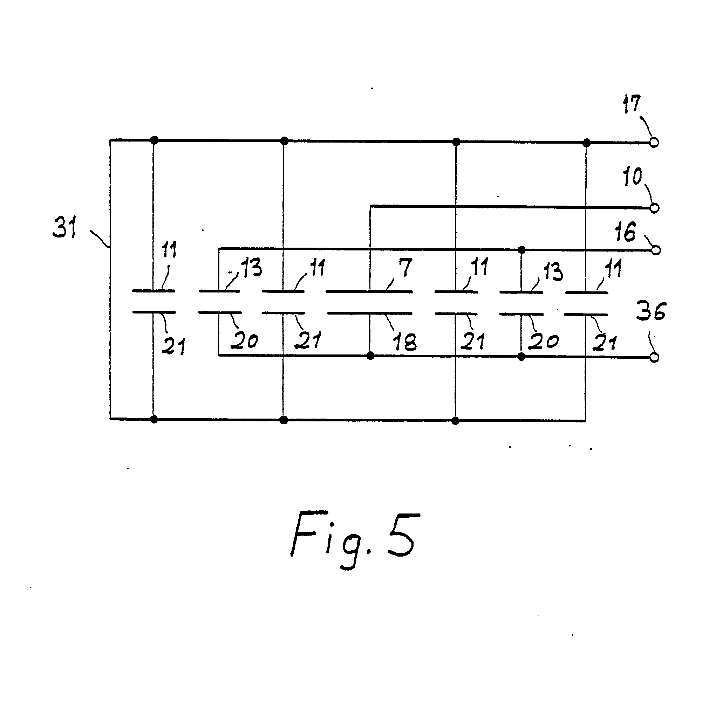

In Fig. 5 sind die verschiedenen Elektroden des Drucksensors in einem elektrischen Schaltbild dargestellt. Der die Meßelektrode 7 und die innere Gegenelektrode 18 aufweisende Meßkondensator liegt zwischen der Meßelektrodenzuleitung 10 und der Gegenelektrodenzuleitung 36. Diese beiden Zuleitungen sind daher, je nach der Auswerteschaltung, mit einer Brückenschaltung, einer Oszillatorschaltung oder einer Auf- und Entladungsschaltung verbunden. Das von einem Guardspannungsgenerator gelieferte Abschirmsignal, das das gleiche Potential wie die Meßelektrode 7 oder die Gegenelektrode 18 hat, wird über die Abschirmzuleitung 17 eingespeist. Zwischen der Referenzzuleitung 16 und der Gegenelektrodenzuleitung 36 steht die Kapazität des Referenzkondensators zur Verfügung.

## Patentansprüche

1. Drucksensor mit einer einen Meßkondensator abdeckenden Halbleitermembran (3), die in einem Abstand von einer feststehenden Gegenelektrode (18) angeordnet ist, dadurch gekennzeichnet, daß als Meßelektrode (7) auf der Halbleitermembran (3) einer ersten Halbleiterscheibe (1) isoliert von dieser eine erste leitende Schicht und daß als Gegenelektrode (18) auf einer zweiten Halbleiterscheibe (2) isoliert von dieser eine zweite leitende Schicht aufgebracht sind.

2. Drucksensor nach Anspruch 1, dadurch gekennzeichnet, daß die Halbleiterscheiben Siliziumscheiben (1, 2) sind, die auf den aufeinander zuweisenden Flächen als Isolierschicht jeweils eine Siliziumdioxidschicht (5, 22) aufweisen.

3. Drucksensor nach Anspruch 1 oder 2, dadurch gekennzeichnet, daß die Meßelektrode (7) und die Gegenelektrode (18) jeweils in radialer Richtung von einer auf der Isolierschicht (5, 22) angeordneten Abschirmelektrode (11, 21) umgeben sind.

4. Drucksensor nach Anspruch 3, dadurch gekennzeichnet, daß die Abschirmelektroden (11, 21) jeweils über ein Fenster (6, 30) der Isolierschicht (5, 22) mit der zugeordneten Halbleiterscheibe (1, 2) ohmisch verbunden sind.

5. Drucksensor nach Anspruch 3 oder 4, dadurch gekennzeichnet, daß die Abschirmelektroden (11, 21) und die Halbleiterscheiben (1, 2) im Bereich ihrer äußeren Ränder über Bumpverbindungen (29, 31) elektrisch und mechanisch miteinander verbunden sind.

6. Drucksensor nach einem der vorstehenden Ansprüche, dadurch gekennzeichnet, daß die Gegenelektrode (18) auf der zweiten Halbleiterscheibe (2) über eine Bumpverbindung (25, 32) mit einem Kontaktstreifen (34) auf der ersten Halbleiterscheibe (1) mechanisch und elektrisch verbunden ist.

7. Drucksensor nach einem der Ansprüche 3 bis 6, dadurch gekennzeichnet, daß die Abschirmelektroden (11, 21) auf beiden Halbleiterscheiben (1, 2) sich gegenüberliegende Ausnehmungen (12) aufweisen, in denen leitende Schichten (13, 20) wenigstens eines Referenzkondensators untergebracht sind.

8. Drucksensor nach Anspruch 7, dadurch gekennzeichnet, daß die Ausnehmungen (12) ringförmig innerhalb der Abschirmelektroden (11, 21) verlaufen, wobei auf der ersten Halbleiterscheibe (1) die erste leitende Schicht (13) des Referenzkondensators die Meßelektrode (7) sowie einen Teil der Abschirmelektrode (11) ringförmig umgibt und die zweite leitende Schicht (20) des Referenzkondensators gegenüberliegend auf der zweiten Halbleiterscheibe (2) über eine Brücke (19) mit der Gegenelektrode (18) elektrisch verbunden vorgesehen ist.

9. Drucksensor nach einem der Ansprüche 2 bis 8, dadurch gekennzeichnet, daß auf beiden Halbleiterscheiben (1, 2) eine Abdeckschicht (37, 38) vorgesehen ist, die lediglich im Bereich der Meßelektrode (7), im Bereich des der Meßelektrode gegenüberliegenden Teiles der Gegenelektrode (18), im Bereich der Bumpverbindungen (25, 29, 31, 32) und im Bereich der Anschlußflächen (9, 15, 35, 40) für die Anschlußleitungen (10, 16, 17, 36) Fenster aufweist.

10. Drucksensor nach Anspruch 9, dadurch gekennzeichnet, daß die Abdeckschicht (37, 38) Silox ist.

**Claims**

1. A pressure sensor having a semiconductor diaphragm (3) which covers a measuring capacitor and which is arranged at a distance from a stationary counter-electrode (18), characterized in that as the measuring electrode (7) there is applied to the semiconductor diaphragm (3) of a first semiconductor disc (1) and insulated from it a first conducting layer and that as the counter-electrode (18) there is applied to a second semiconductor disc (2) and insulated from it a second conducting layer.

2. A pressure sensor as in Claim 1, characterized in that the semiconductor discs are silicon discs (1, 2) which exhibit on the faces pointing towards one another in each case one silicon dioxide layer (5, 22) as the insulating layer.

3. A pressure sensor as in Claim 1 or 2, characterized in that the measuring electrode (7) and the counterelectrode (18) are respectively surrounded in the radial direction by a screening electrode (11, 21) arranged on the insulating layer (5, 22).

4. A pressure sensor as in Claim 3, characterized in that the screening electrodes (11, 21) are respectively connected ohmically via a window (6, 30) in the insulating layer (5, 22) to the associated semiconductor disc (1, 2).

5. A pressure sensor as in Claim 3 or 4, characterized in that the screening electrodes (11, 21) and the semiconductor discs (1, 2) are connected electrically and mechanically together in the region of their outer edges via bump connections (29, 31).

6. A pressure sensor as in one of the preceding Claims, characterized in that the counterelectrode (18) on the second semiconductor disc (2) is connected mechanically and electrically via a bump connection (25, 32) to a contact strip (34) on the first semiconductor disc (1).

7. A pressure sensor as in one of the Claims 3 to 6, characterized in that the screening electrodes (11, 21) on both semiconductor discs (1, 2) exhibit cut-outs (12) lying opposite one another, in which conducting layers (13, 20) of at least one reference capacitor are accommodated.

8. A pressure sensor as in Claim 7, characterized in that the cut-outs (12) run in the form of rings inside the screening electrodes (11, 21) so that on the first semiconductor disc (1) the first conducting layer (13) of the reference capacitor surrounds in the form of a ring the measuring electrode (7) as well as one part of the screening electrode (11) and the second conducting layer (20) of the reference capacitor is provided lying opposite on the second semiconductor disc (2), connected electrically via a bridge (19) to the counter-electrode (18).

9. A pressure sensor as in one of the Claims 2 to 8, characterized in that on both semiconductor discs (1, 2) a cover layer (37, 38) is provided, which exhibits windows merely in the region of the measuring electrode (7), in the region of the part of the counter-electrode (18) lying opposite the measuring electrode, in the region of the bump connections (25, 29, 31, 32) and in the region of the terminal areas (9, 15, 35, 40) for the connecting leads (10, 16, 17, 36).

10. A pressure sensor as in Claim 9, characterized in that the cover layer (37, 38) is silox.

**Revendications**

1. Détecteur de pression capacitif comportant une membrane semi-conductrice (3) recouvrant un condensateur de mesure, ladite membrane étant disposée à distance d'une contre-électrode fixe (18), caractérisé en ce que pour réaliser une électrode de mesure (7) on rapporte sur la membrane semi-conductrice (3) d'un premier disque semi-conducteur (1) et isolée de celui-ci une première couche conductrice et que pour réaliser une contre-électrode (18) on rapporte sur un second disque semi-conducteur (2) et isolée de celui-ci une seconde couche conductrice.

2. Détecteur de pression capacitif, caractérisé en ce que les disques semi-conducteurs sont des disques de silicium (1, 2), qui comportent chacun sur leurs surfaces en vis-à-vis une couche de dioxyde de silicium (5, 22) comme couche d'isolation.

3. Détecteur de pression capacitif, selon l'une quelconque des revendications 1 et 2, caractérisé en ce que l'électrode de mesure (7) et la contre-électrode (18) sont chacune entourées radialement par une électrode d'écran (11, 21) disposée sur la couche isolante (5, 22).

4. Détecteur de pression capacitif selon la revendication 3, caractérisé en ce que les électrodes d'écran (11, 21) sont reliées chacune ohmiquement, au travers d'une fenêtre (6, 30) de la couche isolante (5, 22), au disque semi-conducteur correspondant (1, 2).

5. Détecteur de pression capacitif selon l'une quelconque des revendications 3 et 4, caractérisé en ce que les électrodes d'écran (11, 21) et les disques semi-conducteurs (1, 2) sont reliés entre eux électriquement et mécaniquement par des liaisons bump (29, 31) disposées dans la zone de leur bord extérieur.

6. Détecteur de pression capacitif selon l'une quelconque des revendications 1 à 5, caractérisé en ce que la contre-électrode (18) disposée sur le second disque semi-conducteur (2) est reliée électriquement et mécaniquement avec une bande de contact (34) disposée sur le premier disque semi-conducteur par une liaison bump (25, 32).

7. Détecteur de pression capacitif selon l'une quelconque des revendications 3 à 6, caractérisé en ce que les électrodes d'écran (11, 21) présentent des évidements (12) disposés en vis-à-vis sur les deux disques semi-conducteurs (1, 2), dans lesquels sont disposées les couches conductrices (13, 20) d'au moins un condensateur de référence.

8. Détecteur de pression capacitif selon la revendication 7, caractérisé en ce que les évidements (12) sont de forme annulaire à l'intérieur des électrodes d'écran (11, 21), la première couche conductrice (13) du condensateur de référence entourant de manière annulaire sur le premier disque conducteur (1) l'électrode de mesure (7) ainsi qu'une partie de l'électrode d'écran (11) et la seconde couche conductrice (20) du condensateur de référence disposée en vis-à-vis sur le second disque semi-conducteur (2) étant reliée électriquement à la contre-électrode (18) par un pont (19).

9. Détecteur de pression capacitif selon l'une quelconque des revendications 2 à 8, caractérisé en ce que sur les deux disques semi-conducteurs (1, 2) est disposée une couche de recouvrement (37, 38), qui présente des fenêtres pour les lignes de raccordement (10, 16, 17, 36) uniquement dans la zone de l'électrode de mesure (7), dans la zone de la partie de la contre-électrode (18) en vis-à-vis de l'électrode de mesure, dans la zone des liaisons bump (25, 29, 31, 32) et dans la zone des surfaces de connexion (9, 15, 35, 40).

10. Détecteur de pression capacitif selon la revendication 9, caractérisé en ce que la couche de recouvrement (37, 38) est constituée de silox.

Fig. 1

Fig. 2

Fig. 3

Fig. 4

Fig. 5